# DEMANDE DE BREVET EUROPEEN

(11) **EP 0 670 488 A1**
(43) Date de publication de la demande: **06.09.1995**
(21) Numéro de dépôt: 95400431.3
(22) Date de dépôt: 28.02.1995
(51) Int. Cl.: G01N 21/47

(54) **Appareil de caractérisation optique de matériaux**

(30) Priorité: 02.03.1994 FR 9402396
(71) Demandeur: ALDEX (Société Anonyme), F-45590 Saint Cyr en Val (FR)
(72) Inventeur: Madeline, Frédéric, F-45590 Saint Cyr en Val (FR); Pelou, Clément, F-45590 Saint Cyr en Val (FR)
(74) Mandataire: Tanguy, Gilbert André

(57) **Abrégé**

Appareil de caractérisation optique de matériaux destiné à relever un ensemble de données de diffusion et/ou de transmission de la lumière.

Selon l'invention l'appareil comprend des moyens d'émission de lumière monochromatique (12), des fibres optiques d'émission (14), des fibres optiques de réception (18), des moyens de mesure et de mémorisation (20) et une tête de mesure (22) hémisphérique regroupant des extrémités des fibres d'émission et de réception.

## Description

L'invention se rapporte à un appareil de caractérisation optique de matériaux pour rassembler des données représentatives du comportement de ce matériau à la lumière. Plus précisément, l'appareil conforme à l'invention est destiné à mesurer la répartition spatiale et spectrale de lumière diffusée et/ou transmise par un échantillon de matériau pour une pluralité de valeurs de la longueur d'onde et de la direction d'un flux lumineux incident projeté sur cet échantillon. L'appareil permet d'acquérir et de stocker un grand nombre d'"images" représentatives de cette répartition spatiale variant en fonction des deux paramètres mentionnés ci-dessus.

Dans le domaine de l'architecture, il est désormais possible de mettre en oeuvre des algorithmes de calcul permettant de prédire la répartition des flux lumineux dans une scène de géométrie connue dès lors que cette scène est composée de matériaux optiquement caractérisés. Pour ce faire, chaque matériau utilisé doit être représenté par un ensemble de données, acquises en enregistrant les intensités relatives de lumière diffusée par le matériau dans un grand nombre de directions, lorsqu'il est éclairé par un faisceau lumineux de longueur d'onde donnée et d'incidence prédéterminée par rapport à la surface de l'échantillon de matériau. Un traitement numérique de ces données, connu en soi, est ensuite mis en oeuvre. A titre d'exemple, on peut utiliser des fonctions harmoniques sphériques pour la caractérisation mathématique des indicatrices de diffusion optique d'un tel matériau, comme cela est exposé dans un article publié par S. H. Westin, J.R. Arvo, K.E. Torrance intitulé : "Predicting Reflectance Functions From Complex Surfaces" - Cornell University, Ithaca New York 14853, (COMPUTER GRAPHICS Proceedings, vol. 26, N° 2, publié par ACM SIGGRAPH en juillet 1992).

L'invention concerne un appareil permettant de relever et mémoriser de telles données.

Plus précisément, l'invention concerne donc un appareil de caractérisation optique de matériaux caractérisé en ce qu'il comprend en combinaison :
- des moyens d'émission de lumière sensiblement monochromatique, de longueur d'onde prédéterminée ajustable,
- une pluralité de fibres optiques d'émission,
- des moyens de couplage optique commandés, intercalés entre lesdits moyens d'émission de lumière et lesdites fibres optiques d'émission pour injecter sélectivement ladite lumière dans chacune des desdites fibres optiques d'émission,
- une pluralité de fibres optiques de réception,
- des moyens de mesure et de mémorisation des intensités lumineuses captées par lesdites fibres optiques de réception pour chaque émission de fibre optique d'émission excitée par lesdits moyens d'émission de lumière de longueur d'onde prédéterminée,
- une tête de mesure destinée à être appliquée par un bord circulaire au contact d'une surface dudit matériau et à laquelle sont raccordées une extrémité de chaque fibre optique d'émission et une extrémité de chaque fibre optique de réception,
- et en ce que ladite tête de mesure forme un premier support pour l'ensemble de ces extrémités de fibres optiques, agencé pour que celles-ci soient maintenues sur une surface hémisphérique et orientées radialement, le centre de ladite surface hémisphérique étant confondu avec un point de la surface dudit matériau lorsque ladite tête de mesure est en contact avec cette surface.

Pour un matériau susceptible de transmettre la lumière, il est intéressant de pouvoir aussi caractériser ce matériau en transmission, c'est-à-dire de pouvoir émettre la lumière selon des incidences choisies de chaque côté d'un échantillon de ce matériau et de relever, comme indiqué ci-dessus les "images" des intensités lumineuses captées par les fibres optiques de réception. Dans ce cas, l'appareil est complété de façon à faire intervenir un autre groupe de fibres optiques d'émission. Plus précisément, dans ce cas, l'appareil selon la définition qui précède est caractérisé en ce que ladite tête de mesure est complétée par un second support pour un autre groupe de fibres optiques d'émission, agencé pour que les extrémités des fibres de ce groupe soient maintenues sur une surface hémisphérique de même diamètre que celle du premier support, lesdites extrémités de cet autre groupe de fibres étant orientées radialement par rapport à la surface hémisphérique du second support et en ce que lesdits premier et second supports sont aptes à être placés de part et d'autre d'une plaque dudit matériau et en regard l'un de l'autre, pour la caractérisation de ce matériau en transmission, les fibres optiques d'émission de cet autre groupe étant reliées à des moyens de couplage optique commandés précités.

L'invention sera mieux comprise et d'autres avantages de celle-ci apparaîtront plus clairement à la lumière de la description qui va suivre d'un appareil de caractérisation de matériaux conforme à son principe donnée uniquement à titre d'exemple en référence aux dessins annexés dans lesquels :
- la figure 1 est un schéma de principe illustrant les principaux sous-ensembles de l'appareil et leurs interconnexions ;
- la figure 2 est une vue schématique en élévation de la tête de mesure de l'appareil de la figure 1 ;
- la figure 3 est un schéma de principe plus détaillé des moyens de couplage optique permettant l'adressage des fibres optiques d'émission ; et
- la figure 4 est un schéma de principe partiel semblable à celui de la figure 1, illustrant l'appareil complété pour une caractérisation en transmission d'un échantillon de matériau.

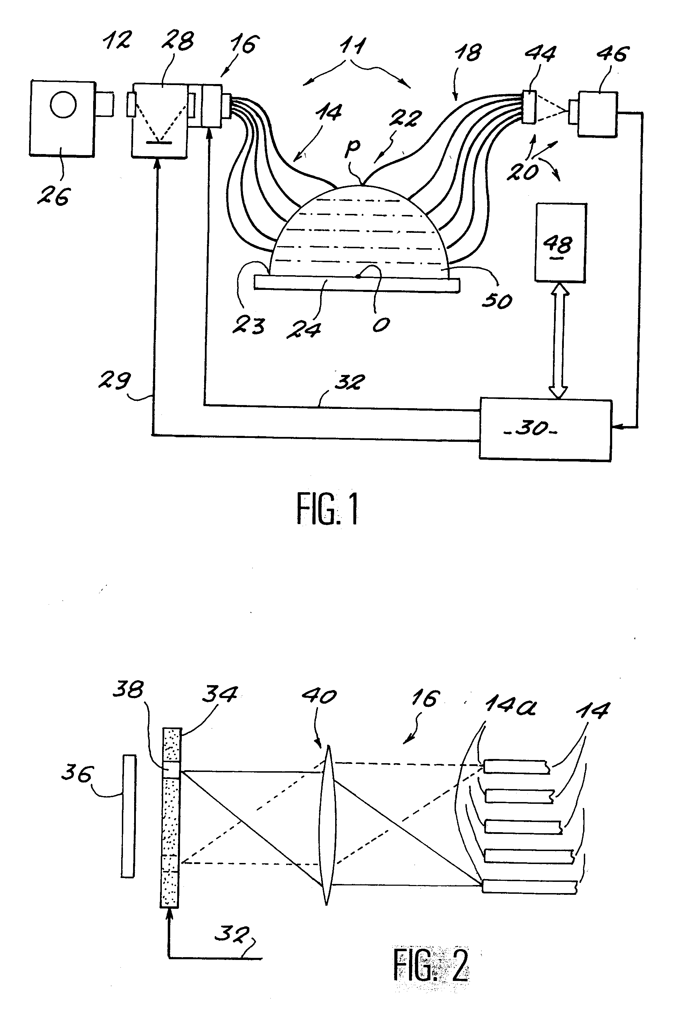

En se référant plus particulièrement aux figures 1 et 2, on a représenté un appareil de caractérisation optique de matériaux 11 comprenant principalement des moyens d'émission de lumière sensiblement monochromatique 12, une pluralité de fibres optiques d'émission 14, des moyens de couplage optique 16 commandés, intercalés entre lesdits moyens d'émission de lumière 12 et lesdites fibres optiques d'émission 14, une pluralité de fibres optiques de réception 18, des moyens de mesure et de mémorisation 20 des intensités lumineuses captées par lesdites fibres optiques de réception 18 et une tête de mesure 22 à laquelle sont raccordées des extrémités de toutes les fibres optiques d'émission et de toutes les fibres optiques de réception. Cette tête de mesure est destinée à être appliquée par un bord circulaire 23 au contact d'une surface plane d'un échantillon 24 du matériau à caractériser. Les moyens d'émission de lumière sensiblement chromatiques 12 sont ici constitués par une source lumineuse 26 stabilisée et un monochromateur 28 motorisé, commandé. La motorisation commandée du monochromateur (liaison de commande 29) est pilotée par une unité centrale qui agit sur la position angulaire du réseau de ce monochromateur et donc sur la longueur d'onde centrale de l'intervalle spectral sélectionné par le monochromateur. La largeur de cet intervalle est fixée par la configuration optique du monochromateur et les valeurs extrêmes, en longueur d'onde, dudit intervalle dépendent de la source lumineuse et des caractéristiques du réseau du monochromateur. On peut considérer qu'à la sortie du monochromateur, on dispose d'une lumière sensiblement monochromatique (de largeur spectrale étroite) prédéterminée et ajustable sous la commande de l'unité centrale. Selon un mode de réalisation préféré, le monochromateur peut être commandé pour émettre à sa sortie une lumière de longueur d'onde comprise entre 350 et 800 nanomètres. Pendant une phase d'acquisition des données, le monochromateur est commandé pour balayer cette plage de longueurs d'onde par paliers de 5 nanomètres.

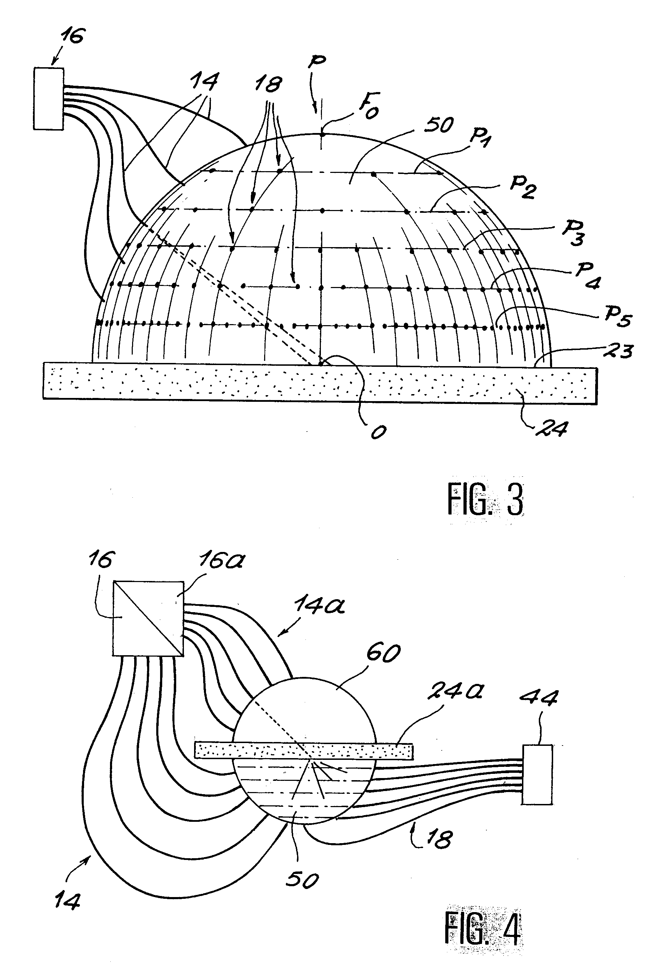

Comme le montre plus particulièrement la figure 3, les moyens de couplage optique 16, également commandés par l'unité centrale (liaison de commande 32) sont agencés pour injecter successivement la lumière monochromatique émise par le monochromateur dans chacune des fibres optiques d'émission 14. Pour ce faire, lesdits moyens de couplage optique comportent un écran à cristaux liquides 34 placé en regard de la pupille de sortie 36 du monochromateur, cet écran est normalement opaque mais comporte une fenêtre de transmission 38 déplaçable en fonction de la commande électrique appliquée à l'écran à cristaux liquides sous le contrôle de l'unité centrale 30. En outre, une optique de couplage 40 est intercalée entre l'écran à cristaux liquides 34 et un ensemble d'extrémités 14a des fibres optiques d'émission, placées côte à côte en regard de l'optique de couplage 40. Comme on le voit sur la figure 3, la position de la fenêtre de transmission 38 permet d'injecter la lumière monochromatique dans une fibre optique d'émission choisie. On peut ainsi "adresser" successivement chacune des fibres optiques d'émission. Autrement dit, à un instant donné du processus d'acquisition, la lumière monochromatique, de longueur d'onde prédéterminée, est injectée dans une seule des fibres d'émission 14.

Par ailleurs, les moyens de mesure et de mémorisation 20 des intensités lumineuses captées par les fibres optiques de réception comportent une interface optomécanique 44 de regroupement des autres extrémités des fibres optiques de réception 18 et une caméra 46 (de préférence de type CCD) placée en regard de cette interface. Ladite interface optomécanique est un support qui regroupe les extrémités correspondantes des fibres optiques de réception côte à côte suivant une configuration représentative des positions des extrémités de ces mêmes fibres, raccordées à la tête de mesure. Les données captées par la caméra 46 sont traitées par l'unité centrale et mémorisées dans une mémoire 48. Pour une longueur d'onde donnée (c'est-à-dire plus précisément pour un intervalle spectral donné) et pour une direction d'incidence donnée, correspondant à la fibre optique d'émission excitée, on mesure un ensemble d'intensités lumineuses correspondant chacune à une direction, représentée par une fibre optique de réception, dont l'extrémité est figée mécaniquement par la structure de la tête de mesure.

Plus précisément, la tête de mesure 22 forme un premier support 50 pour l'ensemble des extrémités des fibres optiques d'émission 14 et des extrémités des fibres optiques de réception 18. Ce support est agencé pour que lesdites extrémités soient maintenues sur une surface hémisphérique et orientées radialement, c'est-à-dire vers le centre 0 de la sphère inscrite dans cette surface. Le centre de celle-ci est confondu avec un point de la surface de l'échantillon 24 du matériau à analyser lorsque la tête de mesure est en contact avec lui, comme représenté aux figures 1 et 2. Selon un mode de réalisation actuellement préféré, ledit premier support 50 est constitué d'une hémisphère de faible épaisseur percée de trous radiaux dans lesquels viennent se positionner les extrémités des fibres optiques d'émission 14 et les extrémités des fibres optiques de réception 18. Cet hémisphère est constitué en un matériau opaque et son bord circulaire 23 venant en contact de la surface du matériau à analyser se situe dans un plan équatorial de la sphère. Ce bord circulaire est avantageusement muni d'un joint assurant un bon contact avec l'échantillon, c'est-à-dire une bonne étanchéité à la lumière. Ledit premier support hémisphérique est par exemple réalisé en aluminium ayant subi un traitement d'oxydation anodique noire. Ce traitement donne à l'intérieur de la sphère une surface noire mate absorbant la lumière parasite. L'implantation des extrémités des fibres optiques est la suivante.

Les fibres optiques d'émission 14 sont en nombre limité (par exemple 5 dans l'exemple représenté). Elles sont ici situées le long d'un méridien de la surface hémisphérique, et réparties sur 90°. Dans la présente description, les méridiens sont à considérer par rapport au plan équatorial de contact défini ci-dessus et au pôle P constitué par le sommet de la surface hémisphérique. Comme mentionné précédemment, l'orientation des extrémités des fibres optiques d'émission est radiale, c'est-à-dire que ces fibres sont dirigées vers le centre 0 de la surface hémisphérique.

Les fibres optiques de réception 18 sont beaucoup plus nombreuses. Elles sont réparties sur un certain nombre de plans parallèles audit plan équatorial défini ci-dessus et, leurs extrémités sont orientées radialement. Il est à noter que sur la figure 1, chaque série de fibres raccordées à un même plan parallèle n'est représentée que par une seule fibre de réception, pour ne pas surcharger le dessin alors que sur la figure 2, seuls les points d'implantation des fibres optiques de réception sont représentés. La répartition des fibres de réception 18 est la suivante. Une seule fibre Fo est implantée au sommet dudit premier support, c'est-à-dire au pôle P. Les autres fibres optiques sont raccordées à la tête de mesure dans des plans parallèles précités et sont équi-réparties angulairement dans chacun de ces plans. Par exemple, dans le mode de réalisation représenté, on a prévu 5 plans parallèles P₁ - P₅ entre le pôle P et le plan équatorial. Ces plans sont équidistants entre eux. Le plan P₁ le plus éloigné du plan équatorial est appelé, ici, le plan de rang 1. Dans ce mode de réalisation, il est à noter qu'un plan de rang N+1 situé entre le pôle P ou sommet du support hémisphérique et le plan équatorial du bord circulaire 23 contient deux fois plus d'extrémités de fibres optiques de réception équi-réparties angulairement que le plan de rang N. Ainsi, si le plan de rang 1 contient six extrémités de fibres optiques, le plan de rang 2 en contient douze, le plan de rang 3 en contient vingt-quatre, etc ... En outre, dans un plan de rang N +1, la moitié des extrémités des fibres optiques de réception est située dans les plans méridiens qui contiennent déjà les extrémités des fibres optiques de réception du plan de rang N. On vient ainsi de définir un "réseau hexagonal sphérique". Comme mentionné ci-dessus, l'agencement des extrémités des fibres optiques de réception raccordées à l'interface optomécanique 44 est comparable. Dans l'exemple décrit, le positionnement de ces extrémités de fibres obéit à une loi géométrique "hexagonale", les extrémités provenant des plans P₁ - P₅ étant agencées en cercles autour de l'extrémité de la fibre provenant du pôle P. La seule différence réside dans le fait que ledit réseau hexagonal sphérique est transformé en un réseau hexagonal plan. Bien entendu, si les fibres étaient distribuées selon un autre type de réseau sur le support 50, on retrouverait une distribution analogue sur l'interface optomécanique 44. Enfin, il est à noter que les extrémités des fibres optiques d'émission sont situées dans un des plans méridiens de la surface hémisphérique qui contient une extrémité de fibre optique de réception située dans le plan P₁ de rang 1. Toutes ces caractéristiques apparaissent sur la figure 2. Un capot de protection non représenté maintient tous les sous-ensembles décrits ci-dessus, les uns par rapport aux autres. Il réalise une protection mécanique et une "étanchéité" à la lumière.

L'appareil décrit jusqu'à présent, spécifiquement adapté à la caractérisation en diffusion du matériau, peut être mis en oeuvre de la façon suivante. L'écran à cristaux liquides est commandé par l'unité centrale pour sélectionner une fibre optique d'émission 14, les fibres peuvent être adressées de façon non séquentielle et la taille de la fenêtre de l'écran à cristaux liquides peut être modifiée pour faire varier, d'une fibre à l'autre, la quantité de lumière injectée. L'unité centrale 30 contrôle l'écran à cristaux liquides 34, éventuellement par l'intermédiaire d'une carte d'interface contenant, en mémoire une séquence de positions prédéfinies de la fenêtre. Indépendamment de la sélection des fibres optiques d'émission, le monochromateur 28 est piloté par l'unité centrale 30 pour sélectionner la longueur d'onde de la lumière émise. Chaque étape de la prise des données associe la sélection d'une longueur d'onde prédéterminée et d'une fibre optique d'émission donc d'une incidence de la lumière dirigée vers le point 0 de l'échantillon 24. Pour toute séquence du cycle d'acquisition, l'interface optomécanique 44 vers laquelle convergent toutes les fibres optiques de réception, reconstitue pour la caméra 46 une image représentative des intensités relatives des sorties des fibres de réception regroupées par l'interface 44, c'est-à-dire une image de la diffusion de la lumière par le matériau, pour une incidence et une longueur d'onde donnée. Chaque image est mémorisée dans la mémoire 48 sous la commande de l'unité de contrôle 30. L'ensemble de ces informations constitue la caractérisation optique du matériau.

En considérant plus particulièrement la figure 4, on voit que la tête de mesure peut être complétée pour permettre une acquisition des données constituant une caractérisation optique en transmission du matériau. L'échantillon de matériau 24a est tel qu'il laisse passer la lumière. Il est constitué d'une plaque d'épaisseur constante prédéterminée et on vient adapter sur chacune de ses faces parallèles, d'une part le même premier support 50 tel que décrit ci-dessus et d'autre part un second support 60 portant un autre groupe de fibres optiques d'émission 14a. Ce second support est pour l'essentiel identique au premier, c'est-à-dire qu'il est agencé pour que les extrémités des fibres optiques de ce groupe supplémentaire soient maintenues sur une surface hémisphérique de même diamètre que celle dudit premier support 50. Bien entendu, les trous dans lesquels sont engagées les extrémités de ces fibres optiques d'émission supplémentaires 14a sont orientés radialement. Les deux bords situés dans les plans équatoriaux des deux supports 50, 60 respectifs sont prévus pour être placés de part et d'autre de la plaque de matériau et en regard l'un de l'autre. Les fibres optiques d'émission de cet autre groupe sont reliées à des moyens de couplage optique commandés 16a du même genre que ceux qui sont décrits en référence à la figure 3. Le cycle d'acquisition est semblable au précédent mais comporte l'adressage d'un plus grand nombre de fibres d'émission. Pour les fibres du second groupe, la lumière perçue par l'ensemble des fibres optiques de réception 18 sera la lumière transmise par le matériau.

Comme on l'a décrit ci-dessus, les fibres optiques d'émission 14 ou 14a sont implantées sur un secteur méridien de 90°. Cette configuration suffit pour des matériaux isotropiques. Pour de nombreux cas réels il sera nécessaire d'implanter des fibres optiques d'émission sur 180° au moins voire sur plusieurs plans méridiens. La configuration la plus complète serait constituée par une implantation par paires de fibres émission-réception réparties sur toute la tête de mesure.

Enfin, il est à noter que l'appareil qui vient d'être décrit est transportable sur un site et que l'échantillon 24 ou 24a peut être directement constitué par une paroi de l'ensemble architectural que l'on souhaite étudier. Autrement dit, pour prédire la répartition des flux lumineux dans une scène de géométrie connue, il suffit de mettre en oeuvre l'appareil qui vient d'être décrit en l'appliquant sur des parties des éléments de structure différents (bois, béton, verre, revêtements, etc ...) qui composent ledit ensemble architectural.

## Revendications

**1.-** Appareil de caractérisation optique de matériaux caractérisé en ce qu'il comprend en combinaison :
- des moyens d'émission de lumière sensiblement monochromatique(12), de longueur d'onde prédéterminée ajustable,
- une pluralité de fibres optiques d'émission (14),
- des moyens de couplage optique (16) commandés, intercalés entre lesdits moyens d'émission de lumière et lesdites fibres optiques d'émission pour injecter sélectivement ladite lumière dans chacune des desdites fibres optiques d'émission,
- une pluralité de fibres optiques de réception (18),
- des moyens de mesure et de mémorisation (20) des intensités lumineuses captées par lesdites fibres optiques de réception pour chaque émission de fibre optique d'émission excitée par lesdits moyens d'émission de lumière de longueur d'onde prédéterminée,
- une tête de mesure (22) destinée à être appliquée par un bord circulaire au contact d'une surface dudit matériau (24) et à laquelle sont raccordées une extrémité de chaque fibre optique d'émission et une extrémité de chaque fibre optique de réception,
- et en ce que ladite tête de mesure forme un premier support (50) pour l'ensemble de ces extrémités de fibres optiques, agencé pour que celles-ci soient maintenues sur une surface hémisphérique et orientées radialement, le centre (0) de ladite surface hémisphérique étant confondu avec un point de la surface dudit matériau lorsque ladite tête de mesure est en contact avec cette surface.

**2.-** Appareil selon la revendication 1, caractérisé en ce que les extrémités des fibres optiques d'émission (14) raccordées à ladite tête de mesure (22) sont situées dans un plan méridien de ladite surface hémisphérique.

**3.-** Appareil selon la revendication 1 ou 2, caractérisé en ce que des extrémités des fibres optiques de réception (P₁ - P₅) (18) raccordées à ladite tête de mesure sont situées dans des plans parallèles audit bord circulaire (23) destiné à être appliqué contre la surface dudit matériau et sont équi-réparties angulairement dans chacun de ces plans.

**4.-** Appareil selon la revendication 3, caractérisé en ce que ladite tête de mesure (22) porte une extrémité de fibre optique de réception au sommet (P) de ladite surface hémisphérique et en ce qu'un plan de rang N situé entre ce sommet et le plan dudit bord circulaire contient 6 N extrémités de fibres optiques de réception équi-réparties angulairement.

**5.-** Appareil selon la revendication 4, caractérisé en ce que, dans un plan de rang N +1, la moitié des extrémités des fibres optiques de réception est située dans les plans méridiens qui contiennent les extrémités des fibres optiques de réception du plan de rang N.

**6.-** Appareil selon l'une des revendications 4 ou 5 caractérisé en ce que les extrémités des fibres optiques d'émission (14) portées par ladite tête de mesure (22) sont situées dans l'un des plans méridiens de ladite surface hémisphérique qui contient une extrémité de fibre optique de réception située dans ledit plan de rang 1(P₁₎.

**7.-** Appareil selon l'une des revendications précédentes, caractérisé en ce que lesdits moyens d'émission de lumière sensiblement monochromatique comportent une source lumineuse (26) et un monochromateur (28) motorisé, commandé, apte à sélectionner la longueur d'onde centrale de l'intervalle spectral de la lumière délivrée pour une série de mesures mettant séquentiellement en oeuvre lesdites fibres optiques d'émission.

**8.-** Appareil selon la revendication 7, caractérisé en ce que lesdits moyens de couplage optique (16) commandés comportent un écran à cristaux liquides (34) à fenêtre de transmission (38) déplaçable et une optique de couplage (40), intercalés entre une sortie (36) dudit monochromateur et un ensemble d'extrémités (14a) desdites fibres optiques d'émission.

**9.** Appareil selon l'une des revendications précédentes, caractérisé en ce que les moyens de mesure et de mémorisation (20) des intensités lumineuses captées par lesdites fibres optiques de réception comportent une interface optomécanique (44) de regroupement des autres extrémités des desdites fibres optiques de réception (18) et une caméra (46) placée en regard de cette interface.

**10.-** Appareil selon la revendication 9, caractérisé en ce que ladite interface optomécanique (44) regroupe les extrémités desdites fibres optiques de réception côte à côte suivant une configuration représentative des positions des extrémités de ces mêmes fibres sur ladite tête de mesure (22).

**11.-** Appareil selon l'une des revendications précédentes caractérisé en ce que ladite tête de mesure est complétée par un second support (60) pour un autre groupe de fibres optiques d'émission (14a), agencé pour que les extrémités des fibres de ce groupe soient maintenues sur une surface hémisphérique de même diamètre que celle du premier support (50), lesdites extrémités de cet autre groupe de fibres étant orientées radialement par rapport à la surface hémisphérique du second support (60) et en ce que lesdits premier et second supports sont aptes à être placés de part et d'autre d'une plaque dudit matériau (24a) et en regard l'un de l'autre, pour la caractérisation de ce matériau en transmission, les fibres optiques d'émission de cet autre groupe étant reliées à des moyens de couplage optique commandés (16a) précités.

**12.-** Appareil selon l'une des revendications précédentes, caractérisé en ce qu'un support (50, 60) précité est constitué par une demi-sphère creuse en matériau opaque, percée de trous orientés radialement, dans lesquels sont engagées les extrémités des fibres optiques d'émission et/ou de réception.
